# EUROPEAN PATENT APPLICATION

(11) **EP 4 525 351 A1**
(43) Date of publication of application: **19.03.2025**
(21) Application number: 22941654.0
(22) Date of filing: 11.05.2022
(51) Int. Cl.: H04L 9/12, H04L 9/08

(54) **KEY EXCHANGE SYSTEM, QKD DEVICE, BASE DEVICE, METHOD AND PROGRAM**

(71) Applicant: Nippon Telegraph And Telephone Corporation, Chiyoda-ku Tokyo 100-8116 (JP)
(72) Inventor: KIYOMURA, Yutaro, Musashino-shi, Tokyo 180-8585 (JP); CHIKARA, Sakae, Musashino-shi, Tokyo 180-8585 (JP); KOBAYASHI, Tetsutaro, Musashino-shi, Tokyo 180-8585 (JP); CHIDA, Koji, Musashino-shi, Tokyo 180-8585 (JP); NATSUKAWA, Katsuyuki, Musashino-shi, Tokyo 180-8585 (JP); TANIGUCHI, Atsushi, Musashino-shi, Tokyo 180-8585 (JP); SHIRAI, Daisuke, Musashino-shi, Tokyo 180-8585 (JP); TAKASUGI, Koichi, Musashino-shi, Tokyo 180-8585 (JP)
(74) Representative: Murgitroyd & Company
(86) International application number: PCT/JP2022/019987
(87) International publication number: WO 2023/218574

(57) **Abstract**

A key exchange system according to an aspect of the present disclosure is a key exchange system including: a quantum key distribution (QKD) network including a plurality of QKD apparatuses that performs exchange of a key by using a quantum key distribution protocol and a key management apparatus that relays the key; and a plurality of hub apparatuses that performs encrypted communication by using the key received from the key management apparatus, in which each of the QKD apparatuses includes: an encryption unit configured to encrypt the key by using a public key of one of the hub apparatuses in a case where the key is exchanged with another QKD apparatus by using the quantum key distribution protocol; and a transmission unit configured to transmit the encrypted key to the key management apparatus, and each of the hub apparatuses includes a decryption unit configured to decrypt the encrypted key by using a secret key corresponding to the public key in a case where the encrypted key is received from the key management apparatus.

## Description

### Technical Field

The present disclosure relates to a key exchange system, a QKD apparatus, a hub apparatus, a method, and a program.

### Background Art

It is known that it becomes possible to solve a mathematical problem (a prime factorization problem or a discrete logarithm problem), that is a security basis of existing cipher, in a realistic time by practical application of a quantum computer. For this reason, there is a risk that an RSA cipher or an elliptic curve cipher that is an existing cipher may be compromised, and it is necessary to shift to encryption technology that cannot be decrypted even by a quantum computer.

As encryption technologies that cannot be decrypted by a quantum computer, there are post-quantum cryptography (PQC) and quantum key distribution (QKD). In addition, there is a QKD network as a technology that implements secure key exchange in a wide area by networking QKD and performing key relay via a key management apparatus (for example, Non Patent Literature 1).

### Citation List

### Non Patent Literature

Non Patent Literature 1: ITU-T Y.3803, Internet <URL: https://www.itu.int/rec/T-REC-Y.3803-202012-I/en>

### Summary of Invention

### Technical Problem

However, in the conventional QKD network, since key management apparatuses also have key information, there is a problem that security cannot be guaranteed in a case where some key management apparatuses are unreliable.

The present disclosure has been made in view of the above points, and an object thereof is to provide a technology capable of performing secure key exchange by a QKD network even in a case where there is an unreliable key management apparatus.

### Solution to Problem

A key exchange system according to an aspect of the present disclosure is a key exchange system including: a QKD network including a plurality of QKD apparatuses that performs exchange of a key by using a quantum key distribution protocol and a key management apparatus that relays the key; and a plurality of hub apparatuses that performs encrypted communication by using the key received from the key management apparatus, in which each of the QKD apparatuses includes: an encryption unit configured to encrypt the key by using a public key of one of the hub apparatuses in a case where the key is exchanged with another QKD apparatus by using the quantum key distribution protocol; and a transmission unit configured to transmit the encrypted key to the key management apparatus, and each of the hub apparatuses includes a decryption unit configured to decrypt the encrypted key by using a secret key corresponding to the public key in a case where the encrypted key is received from the key management apparatus.

### Advantageous Effects of Invention

Provided is a technology capable of performing secure key exchange by a QKD network even in a case where there is an unreliable key management apparatus.

### Brief Description of Drawings

[Fig. 1] Fig. 1 is a diagram illustrating an example of key exchange by a QKD network.
[Fig. 2] Fig. 2 is a diagram illustrating an example of an overall configuration of a key exchange system according to a present embodiment.
[Fig. 3] Fig. 3 is a sequence diagram illustrating an example of processing executed by the key exchange system according to the present embodiment.
[Fig. 4] Fig. 4 is a diagram illustrating an example of a hardware configuration of a computer.

### Description of Embodiments

Hereinafter, one embodiment of the present invention will be described.

### <Key Exchange by QKD Network>

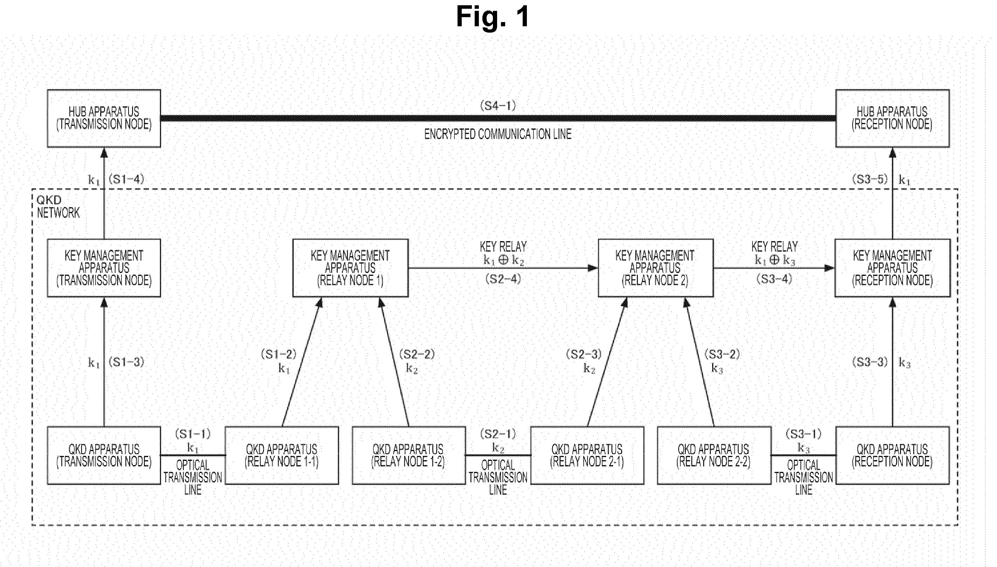

Hereinafter, an example of key exchange by a conventional QKD network will be described with reference to Fig. 1. Note that, for details of the QKD network, refer to, for example, Non Patent Literature 1 described above.

In Fig. 1, a case is assumed where encrypted communication is performed between a hub apparatus (transmission node) existing in a hub on a data transmission side and a hub apparatus (reception node) existing in a hub on a data reception side. At this time, it is assumed that there are a key management apparatus (transmission node) and a QKD apparatus (transmission node) in the hub on the data transmission side, and there are a key management apparatus (reception node) and a QKD apparatus (reception node) in the hub on the data reception side. In addition, it is assumed that there are two relay hubs between the hub on the data transmission side and the hub on the data reception side, and in a first relay hub, there are a key management apparatus (relay node 1), a QKD apparatus (relay node 1-1) connected to a QKD apparatus (transmission node) via an optical transmission line, and a QKD apparatus (relay node 1-2) connected to a QKD apparatus (relay node 2-1) to be described later via an optical transmission line, and in a second relay hub, there are a key management apparatus (relay node 2), the QKD apparatus (relay node 2-1) connected to the QKD apparatus (relay node 1-2) via an optical transmission line, and a QKD apparatus (relay node 2-2) connected to the QKD apparatus (reception node) via an optical transmission line. Note that a QKD network is configured by the key management apparatuses and communication lines therebetween, and the QKD apparatuses and optical transmission lines therebetween.

At this time, a key k₁ for encrypting communication between the hub apparatus (transmission node) and the hub apparatus (reception node) is shared (key exchange) by S1-1 to S1-4, S2-1 to S2-4, S3-1 to S3-5, and S4-1 below.

The QKD apparatus (transmission node) shares k₁ with the QKD apparatus (relay node 1-1) via the optical transmission line by using a QKD protocol (for example, the BB84 scheme or the like) (S1-1). The QKD apparatus (relay node 1-1) transmits k₁ to the key management apparatus (relay node 1) (S1-2). The QKD apparatus (transmission node) transmits k₁ to the key management apparatus (transmission node) (S1-3). Then, the key management apparatus (transmission node) transmits k₁ to the hub apparatus (transmission node) (S1-4).

The QKD apparatus (relay node 1-2) shares k₂ with the QKD apparatus (relay node 2-1) via the optical transmission line by using the QKD protocol (for example, the BB84 scheme or the like) (S2-1). The QKD apparatus (relay node 1-2) transmits k₂ to the key management apparatus (relay node 1) (S2-2). On the other hand, the QKD apparatus (relay node 2-1) transmits k₂ to the key management apparatus (relay node 2) (S2-3). In addition, the key management apparatus (relay node 1) transmits a result of an operation of an exclusive OR (XOR) of k₁ and k₂ to the key management apparatus (relay node 2) (S2-4). This is called a key relay.

The QKD apparatus (relay node 2-2) shares k₃ with the QKD apparatus (reception node) via the optical transmission line by using the QKD protocol (for example, the BB84 scheme or the like) (S3-1). The QKD apparatus (relay node 2-2) transmits k₃ to the key management apparatus (relay node 2) (S3-2). On the other hand, the QKD apparatus (reception node) transmits k₃ to the key management apparatus (reception node) (S3-3). In addition, the key management apparatus (relay node 2) transmits, to the key management apparatus (reception node), a result of an operation of an exclusive OR of the result of the operation received from the key management apparatus (relay node 1) (that is, the exclusive OR of k₁ and k₂) and k₂ and k₃ (that is, an exclusive OR of k₁ and k₃) (S3-4). This is called a key relay. Then, the key management apparatus (reception node) transmits, to the hub apparatus (reception node), a result (that is, k₁) of an operation of the result of the operation received from the key management apparatus (relay node 2) (that is, the exclusive OR of k₁ and k₃) and k₃ (S3-5).

As a result, the hub apparatus (transmission node) and the hub apparatus (reception node) can perform encrypted communication by using k₁ (S4-1).

As described above, in the QKD network, the key management apparatuses have key information. For this reason, in a case where some key management apparatuses are unreliable, there is a problem that security cannot be guaranteed. Thus, hereinafter, a key exchange method capable of concealing key information from all key management apparatuses including an unreliable key management apparatus is proposed. Note that the unreliable key management apparatus is, for example, a key management apparatus posing a risk of, for example, leaking the key information.

### <Proposed Method>

In the proposed method, to conceal key information from key management apparatuses, one of hub apparatuses generates a key pair of a public key pk and a secret key sk, and then the secret key sk is shared between the hub apparatuses, and the public key pk is distributed to QKD apparatuses. Then, the QKD apparatuses do not pass a QKD key itself but a key obtained by encrypting the QKD key by using the public key pk to the key management apparatuses. The QKD key can be concealed from all the key management apparatuses including unreliable key management apparatuses. On the other hand, the hub apparatuses that have received the encrypted QKD key from the key management apparatuses can obtain a QKD key by decrypting the encrypted QKD key by using the secret key sk.

Hereinafter, a key exchange system that shares a QKD key by the above proposed method will be described. Note that, in the following, for the sake of simplicity, a case where there are two relay hubs will be described, but the number of relay hubs is not limited to two, and even in a case where there are any number of relay hubs of 0 or more including a case where there is no relay hub, the following embodiment can be similarly applied.

### <Overall Configuration of Key Exchange System>

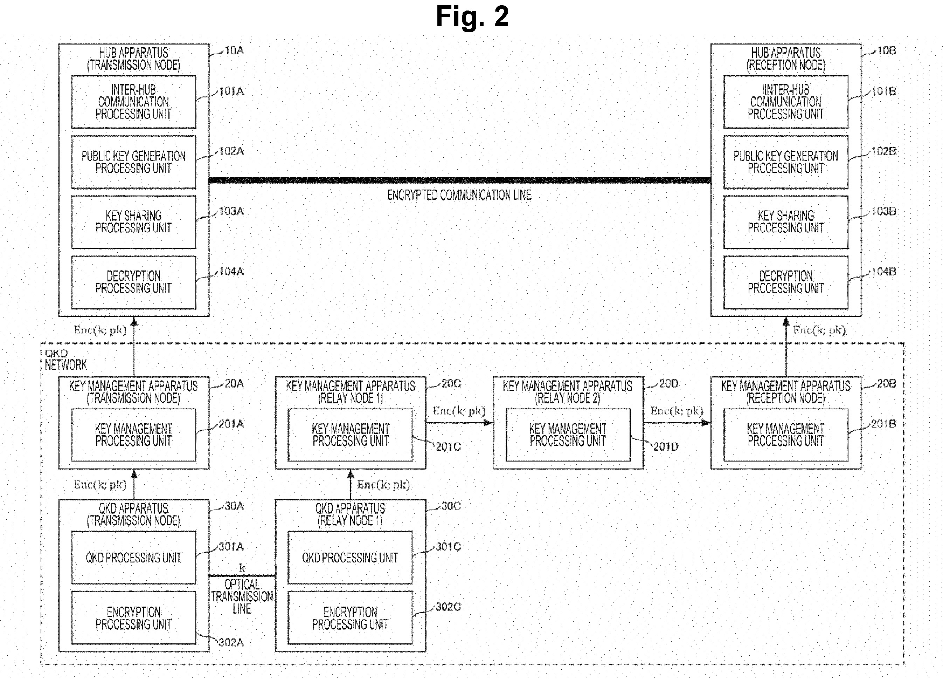

An example of an overall configuration of the key exchange system according to the present embodiment will be described with reference to Fig. 2.

As illustrated in Fig. 2, the key exchange system according to the present embodiment includes a plurality of hub apparatuses 10, a plurality of key management apparatuses 20, and a plurality of QKD apparatuses 30. Hereinafter, a hub apparatus 10 existing in a hub on the data transmission side is referred to as a "hub apparatus 10A", and a hub apparatus 10 existing in a hub on the data reception side is referred to as a "hub apparatus 10B". Similarly, a key management apparatus 20 and a QKD apparatus 30 existing in the hub on the data transmission side are referred to as a "key management apparatus 20A" and a "QKD apparatus 30A", respectively, and a key management apparatus 20 existing in the hub on the data reception side is referred to as a "key management apparatus 20B". In addition, a key management apparatus 20 and a QKD apparatus 30 existing in the first relay hub are referred to as a "key management apparatus 20C" and a "QKD apparatus 30C", respectively, and a key management apparatus 20 existing in the second relay hub is referred to as a "key management apparatus 20D". Note that a QKD network is configured by the key management apparatuses 20 and communication lines therebetween, and the QKD apparatuses 30 and optical transmission lines therebetween.

Note that a QKD apparatus 30 may also exist in the hub on the data reception side or the second relay hub, and a QKD apparatus 30 other than the QKD apparatus 30C may also exist in the first relay hub; however, in the present embodiment, these QKD apparatuses 30 do not particularly perform processing, and thus, are not illustrated.

A hub apparatus 10 is an information processing apparatus (computer) that performs encrypted communication with a hub apparatus 10 existing in another hub. The hub apparatus 10 includes an inter-hub communication processing unit 101, a public key generation processing unit 102, a key sharing processing unit 103, and a decryption processing unit 104. These units are implemented, for example, by processing that one or more programs installed in the hub apparatus 10 cause a processor such as a central processing unit (CPU) to execute.

The inter-hub communication processing unit 101 executes encrypted communication with the hub apparatus 10 existing in the other hub, various types of processing for performing the encrypted communication, and the like. The public key generation processing unit 102 executes processing for generating a key pair of a secret key sk and a public key pk. The key sharing processing unit 103 executes processing for sharing the secret key sk with the hub apparatus 10 existing in the other hub. The decryption processing unit 104 executes processing for decrypting information, encrypted by using the public key pk, by using the secret key sk. Hereinafter, data x encrypted by using the public key pk is also represented as Enc(x; pk), and data obtained by decrypting data x' by using the secret key sk is also represented as Dec(x'; sk). In addition, hereinafter, the inter-hub communication processing unit 101, the public key generation processing unit 102, the key sharing processing unit 103, and the decryption processing unit 104 included in the hub apparatus 10A are referred to as an "inter-hub communication processing unit 101A", a "public key generation processing unit 102A", a "key sharing processing unit 103A", and a "decryption processing unit 104A", respectively. Similarly, the inter-hub communication processing unit 101, the public key generation processing unit 102, the key sharing processing unit 103, and the decryption processing unit 104 included in the hub apparatus 10B are referred to as an "inter-hub communication processing unit 101B", a "public key generation processing unit 102B", a "key sharing processing unit 103B", and a "decryption processing unit 104B", respectively.

A key management apparatus 20 is an information processing apparatus (computer) that transmits Enc(k; pk) (here, k is a QKD key shared between the hub apparatus 10A and the hub apparatus 10B) to a key management apparatus 20 existing in another hub . The key management apparatus 20 includes a key management processing unit 201. The key management processing unit 201 is implemented, for example, by processing that one or more programs installed in the key management apparatus 20 cause a processor such as a CPU to execute. The key management processing unit 201 executes processing for transmitting Enc(k; pk) to the key management apparatus 20 existing in the other hub. Hereinafter, the key management processing unit 201 included in the key management apparatus 20A is referred to as a "key management processing unit 201A", the key management processing unit 201 included in the key management apparatus 20B is referred to as a "key management processing unit 201B", the key management processing unit 201 included in the key management apparatus 20C is referred to as a "key management processing unit 201C", and the key management processing unit 201 included in the key management apparatus 20D is referred to as a "key management processing unit 201D".

A QKD apparatus 30 is an information processing apparatus (computer) that shares a QKD key with a QKD apparatus 30 existing in another hub via an optical transmission line by using the QKD protocol (for example, the BB84 scheme or the like) and executes various types of processing related thereto. The QKD apparatus 30 includes a QKD processing unit 301 and an encryption processing unit 302. These units are implemented, for example, by processing that one or more programs installed in the QKD apparatus 30 cause a processor such as a CPU to execute. The QKD processing unit 301 executes processing for sharing the QKD key with the QKD apparatus 30 existing in the other hub via the optical transmission line by using the QKD protocol. The encryption processing unit 302 executes processing for encrypting the QKD key by using the public key pk. Hereinafter, the QKD processing unit 301 and the encryption processing unit 302 included in the QKD apparatus 30A are referred to as a "QKD processing unit 301A" and an "encryption processing unit 302A", respectively. Similarly, the QKD processing unit 301 and the encryption processing unit 302 included in the QKD apparatus 30B are referred to as a "QKD processing unit 301B" and an "encryption processing unit 302B", respectively.

### <Processing Executed by Key Exchange System>

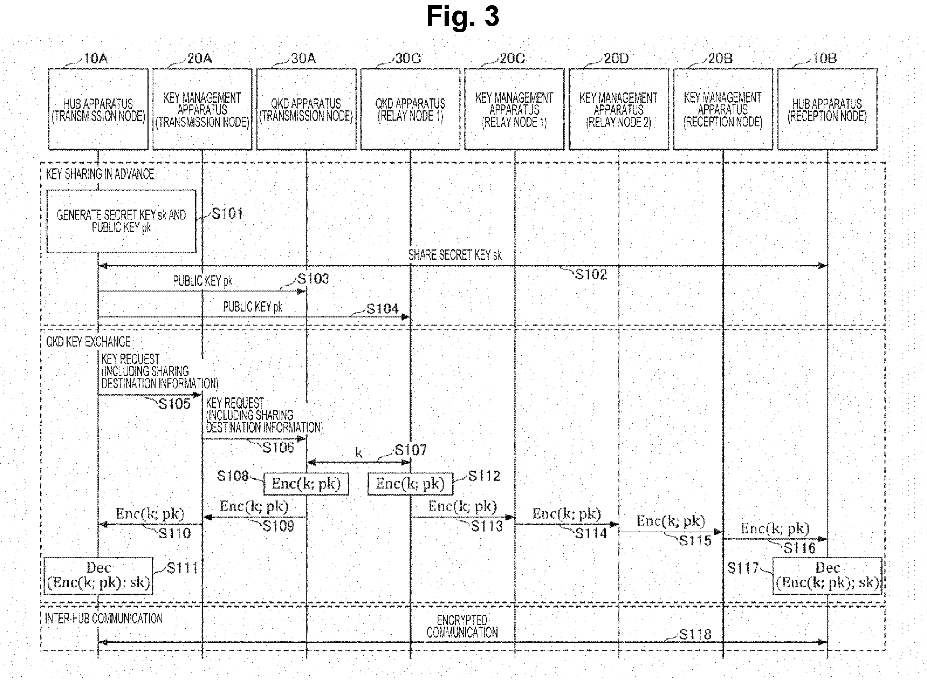

An example of processing executed by the key exchange system according to the present embodiment will be described with reference to Fig. 3. Note that the processing executed by the key exchange system according to the present embodiment is roughly divided into key sharing in advance (steps S101 to S104), QKD key exchange (steps S105 to S117), and inter-hub communication (step S118).

The public key generation processing unit 102A of the hub apparatus 10A generates a key pair of a secret key sk and a public key pk (step S101). Note that the public key generation processing unit 102B of the hub apparatus 10B may generate the key pair of the secret key sk and the public key pk instead of the public key generation processing unit 102A of the hub apparatus 10A.

The key sharing processing unit 103A of the hub apparatus 10A and the key sharing processing unit 103B of the hub apparatus 10B share the secret key sk (step S102).

The key sharing processing unit 103A of the hub apparatus 10A transmits the public key pk to the QKD apparatus 30A (step S103). Similarly, the key sharing processing unit 103A of the hub apparatus 10A transmits the public key pk to the QKD apparatus 30C (step S104).

The inter-hub communication processing unit 101A of the hub apparatus 10A transmits a key request to the key management apparatus 20A (step S105). The key request is a request for a QKD key to be shared with the hub apparatus 10B. The key request includes sharing destination information indicating the hub apparatus 10B that is a sharing destination of the QKD key.

The key management processing unit 201A of the key management apparatus 20A transmits the key request to the QKD apparatus 30A (step S106).

Upon receiving the key request, the QKD processing unit 301A of the QKD apparatus 30A shares a QKD key k with the QKD processing unit 301B of the QKD apparatus 30B via the optical transmission line by using the QKD protocol (for example, the BB84 scheme or the like) (step S107).

The encryption processing unit 302A of the QKD apparatus 30A encrypts the key k by using the public key pk and generates Enc(k; pk) (step S108). The QKD processing unit 301A of the QKD apparatus 30A transmits the Enc(k; pk) to the key management apparatus 20A (step S109). The key management processing unit 201A of the key management apparatus 20A transmits the Enc(k; pk) to the hub apparatus 10A (step S110). Then, the decryption processing unit 104A of the hub apparatus 10A decrypts the Enc(k; pk) by using the secret key sk, and generates k = Dec(Enc(k; pk); sk) (step S111). As a result, the hub apparatus 10A can obtain k.

On the other hand, the encryption processing unit 302B of the QKD apparatus 30B encrypts the key k by using the public key pk and generates Enc(k; pk) (step S112). The QKD processing unit 301A of the QKD apparatus 30B transmits the Enc(k; pk) to the key management apparatus 20C (step S113). The key management processing unit 201C of the key management apparatus 20C transmits (key relay) the Enc(k; pk) to the key management apparatus 20D (step S114). The key management processing unit 201D of the key management apparatus 20D transmits (key relay) the Enc(k; pk) to the key management apparatus 20B (step S115). The key management processing unit 201B of the key management apparatus 20B transmits the Enc(k; pk) to the hub apparatus 10B (step S116). Then, the decryption processing unit 104B of the hub apparatus 10B decrypts the Enc (k; pk) by using the secret key sk, and generates k = Dec(Enc(k; pk); sk) (step S117). As a result, the hub apparatus 10B can obtain k.

As described above, the inter-hub communication processing unit 101A of the hub apparatus 10A and the inter-hub communication processing unit 101B of the hub apparatus 10B can perform encrypted communication with k as an encryption key (step S118).

### <Hardware Configuration of Each Device>

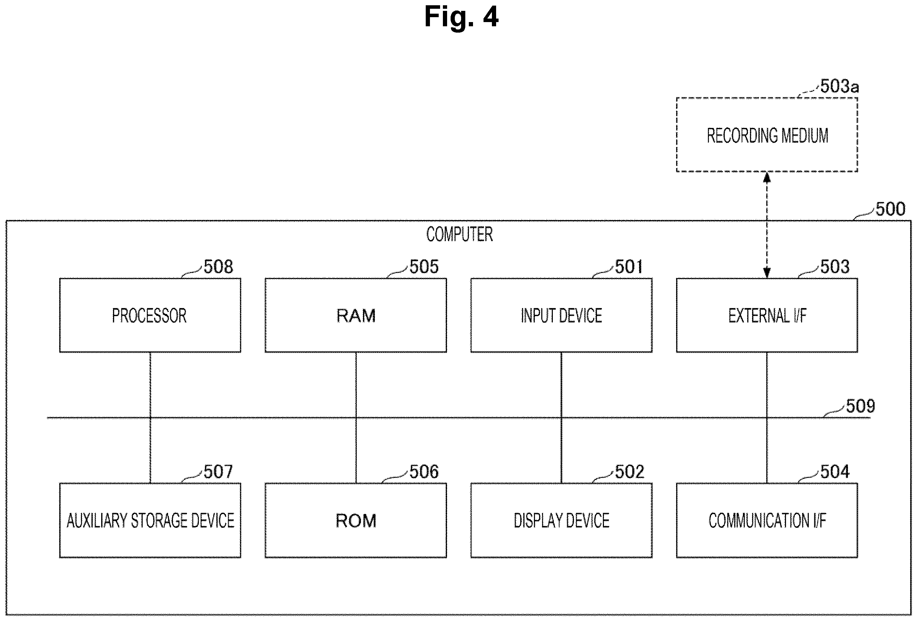

A hub apparatus 10, a key management apparatus 20, and a QKD apparatus 30 can be implemented by, for example, a hardware configuration of a computer 500 illustrated in Fig. 4.

The computer 500 illustrated in Fig. 4 includes an input device 501, a display device 502, an external I/F 503, a communication I/F 504, a random access memory (RAM) 505, a read only memory (ROM) 506, an auxiliary storage device 507, and a processor 508. These pieces of hardware are communicably connected to each other via a bus 509.

The input device 501 is, for example, a keyboard, a mouse, a touch panel, a physical button, or the like. The display device 502 is, for example, a display, a display panel, or the like. Note that the computer 500 may not include at least one of the input device 501 and the display device 502, for example.

The external I/F 503 is an interface with an external device such as a recording medium 503a. The computer 500 can read or write the recording medium 503a via the external I/F 503. Examples of the recording medium 503a include a flexible disk, a compact disc (CD), a digital versatile disk (DVD), a secure digital memory card (SD memory card), a universal serial bus (USB) memory card, and the like.

The communication I/F 504 is an interface for connecting the computer 500 to a communication network. The RAM 505 is a volatile semiconductor memory (storage device) that temporarily holds programs and data. The ROM 506 is a non-volatile semiconductor memory (storage device) capable of holding programs and data even when the power is turned off. The auxiliary storage device 507 is, for example, a storage device such as a hard disk drive (HDD), a solid state drive (SSD), or a flash memory. The processor 508 is, for example, an arithmetic device such as a CPU.

The hub apparatus 10, the key management apparatus 20, and the QKD apparatus 30 according to the present embodiment have, for example, the hardware configuration of the computer 500 illustrated in Fig. 4, thereby being able to implement the above-described various types of processing. Note that the hardware configuration of the computer 500 illustrated in Fig. 4 is an example, and the hardware configuration of the computer 500 is not limited thereto. For example, the computer 500 may include a plurality of auxiliary storage devices 507 and a plurality of processors 508, does not necessarily include a part of the illustrated hardware, or may include various types of hardware other than the illustrated hardware.

### <Conclusion>

As described above, in the key exchange system according to the present embodiment, the secret key sk of public key cryptography is shared between the hub apparatuses, and the public key pk corresponding to the secret key sk is disclosed to the QKD apparatuses 30. As a result, the QKD apparatuses 30 sharing the key k by using the QKD protocol can encrypt the key k by using the public key pk, and thus, can conceal the QKD key k from the key management apparatuses. Therefore, for example, even in a case where there is an unreliable key management apparatus in the QKD network, leakage of key information and the like can be prevented, and the security of the entire system can be improved.

### <Generation of Secret Key sk and Public Key pk, and Sharing of Secret Key sk>

In the above embodiment, the public key cryptography for generating the secret key sk and the public key pk is not particularly limited; however, for example, it is possible to generate a secure key pair also for a quantum computer by using post-quantum cryptography such as NTRU that is a type of lattice-based cryptography. In addition, a method of sharing the secret key sk between the hub apparatus 10A and the hub apparatus 10B is not particularly limited, and an existing key encapsulation mechanism (KEM) or the like may be used; however, for example, by using the KEM of the post-quantum cryptography, it is possible to perform secure key sharing for the quantum computer similarly.

### <Application Example>

When communication is started between the hub apparatus 10A and the hub apparatus 10B, for example, the hub apparatus 10A existing in the hub on the data transmission side may be able to select whether to perform key exchange by the existing QKD network or key exchange by the key exchange system according to the present embodiment. As a result, not only security but also convenience for the hub apparatuses 10 can be enhanced.

The present invention is not limited to the above-mentioned specifically disclosed embodiments, and various modifications and changes, combinations with known technologies, and the like can be made without departing from the scope of the claims.

### Reference Signs List

- 10: Hub apparatus
- 20: Key management apparatus
- 30: QKD apparatus
- 101: Inter-hub communication processing unit
- 102: Public key generation processing unit
- 103: Key sharing processing unit
- 104: Decryption processing unit
- 201: Key management processing unit
- 301: QKD processing unit
- 302: Encryption processing unit
- 500: Computer
- 501: Input device
- 502: Display device
- 503: External I/F
- 503a: Recording medium
- 504: Communication I/F
- 505: RAM
- 506: ROM
- 507: Auxiliary storage device
- 508: Processor
- 509: Bus

## Claims

1. A key exchange system comprising:
a quantum key distribution (QKD) network including
a plurality of QKD apparatuses that performs exchange of a key by using a quantum key distribution protocol, and
a key management apparatus that relays the key; and
a plurality of hub apparatuses that performs encrypted communication by using the key received from the key management apparatus, wherein
each of the QKD apparatuses includes
an encryption unit configured to encrypt the key by using a public key of one of the hub apparatuses in a case where the key is exchanged with another QKD apparatus by using the quantum key distribution protocol, and
a transmission unit configured to transmit the encrypted key to the key management apparatus, and
each of the hub apparatuses includes
a decryption unit configured to decrypt the encrypted key by using a secret key corresponding to the public key in a case where the encrypted key is received from the key management apparatus.

2. The key exchange system according to claim 1,
wherein the public key and the secret key are keys of post-quantum cryptography.

3. The key exchange system according to claim 1 or 2, wherein each of the hub apparatuses further includes a key sharing unit configured to share the secret key with another hub apparatus by using a key encapsulation mechanism based on post-quantum cryptography.

4. A quantum key distribution (QKD) apparatus in a key exchange system including: a QKD network including a plurality of QKD apparatuses that performs exchange of a key by using a quantum key distribution protocol and a key management apparatus that relays the key; and a plurality of hub apparatuses that performs encrypted communication by using the key received from the key management apparatus, the QKD apparatus comprising:
an encryption unit configured to encrypt the key by using a public key of one of the hub apparatuses in a case where the key is exchanged with another QKD apparatus by using the quantum key distribution protocol; and
a transmission unit configured to transmit the encrypted key to the key management apparatus.

5. A hub apparatus in a key exchange system including: a quantum key distribution (QKD) network including a plurality of QKD apparatuses that performs exchange of a key by using a quantum key distribution protocol and a key management apparatus that relays the key; and a plurality of hub apparatuses that performs encrypted communication by using the key received from the key management apparatus, the hub apparatus comprising:
a key generation unit configured to generate a public key and a secret key by using predetermined public key cryptography;
a key distribution unit configured to distribute the public key to the plurality of QKD apparatuses; and
a decryption unit configured to decrypt the key by using the secret key in a case where the key encrypted by a corresponding one of the QKD apparatuses by using the public key is received from the key management apparatus.

6. A method used in a key exchange system including: a quantum key distribution (QKD) network including a plurality of QKD apparatuses that performs exchange of a key by using a quantum key distribution protocol and a key management apparatus that relays the key; and a plurality of hub apparatuses that performs encrypted communication by using the key received from the key management apparatus, the method comprising:
an encryption procedure of encrypting, by each of the QKD apparatuses, the key by using a public key of one of the hub apparatuses in a case where the key is exchanged with another QKD apparatus by using the quantum key distribution protocol;
a transmission procedure of transmitting, by each of the QKD apparatuses, the encrypted key to the key management apparatus; and
a decryption procedure of decrypting, by each of the hub apparatuses, the encrypted key by using a secret key corresponding to the public key in a case where the encrypted key is received from the key management apparatus.

7. A program for causing a computer to function as a QKD apparatus or a hub apparatus included in the key exchange system of claim 1.
